# FASCICULE DE BREVET EUROPEEN

(11) **EP 2 071 216 B1**
(45) Date de publication et mention de la délivrance du brevet: **15.08.2012**
(21) Numéro de dépôt: 08170952.9
(22) Date de dépôt: 08.12.2008
(51) Int. Cl.: F16J 15/08, H01M 8/02

(54) **Joint d'étanchéité superplastique, de préférence pour système à cellules électrochimiques**
Superplastische Dichtungsfuge, insbesondere für System mit elektrochemischen Zellen
Superplastic seal, preferably for a system with electrochemical cells

(30) Priorité: 13.12.2007 FR 0759819
(43) Date de publication de la demande: 17.06.2009
(73) Titulaire: Commissariat à l'Énergie Atomique et aux Énergies Alternatives, 75015 Paris (FR)
(72) Inventeur: Reytier, Magali, 38000 Grenoble (FR); Couturier, Raphaël, 38360 Sassenage (FR); Gillia, Olivier, 38360 Sassenage (FR); Rigal, Emmanuel, 38950 Saint Marin le Vinoux (FR)
(74) Mandataire: Ilgart, Jean-Christophe

(56) Documents cités:
- WO-A-03/032420
- WO-A-2005/106999
- DE-A- 2 135 695

## Description

L'invention concerne de façon générale un joint d'étanchéité destiné à être interposé entre deux éléments quelconques, et de préférence entre deux éléments présentant des coefficients de dilatation thermique différents.

La présente invention s'applique plus particulièrement, mais non exclusivement, au domaine des systèmes à cellules électrochimiques, de préférence des systèmes du type électrolyseur haute température, également dénommé EHT, et/ou du type pile à combustible, de préférence fonctionnant à haute température comme des piles dites SOFC (de l'anglais « Solid Oxyde Fuel Cell »).

De façon connue, un électrolyseur de vapeur d'eau à haute température est destiné à produire de l'hydrogène. Pour ce faire, il comprend une pluralité de cellules électrochimiques empilées, chaque cellule étant pourvue d'une anode poreuse et d'une cathode poreuse, ainsi que d'un électrolyte agencé entre l'anode et la cathode. De plus, à chaque cellule électrochimique sont associés un interconnecteur anodique et un interconnecteur cathodique, reliés respectivement à l'anode et à la cathode, et chacun en contact étanche avec l'électrolyte. (voir par exemple WO-A-2005/106999)

Au niveau de la cathode poreuse de l'électrolyseur alimentée en vapeur d'eau, a lieu la dissociation des molécules d'eau. Les ions migrent à travers l'électrolyte solide, généralement en céramique, grâce à l'application d'une tension appropriée, pour se recombiner aux électrodes.

Pour éviter la recombinaison de l'hydrogène et de l'oxygène, il est donc prévu d'étancher la liaison entre l'électrolyte et l'interconnecteur cathodique, ainsi que la liaison entre l'électrolyte et l'interconnecteur anodique, cela permettant simultanément d'éviter la fuite des gaz vers l'extérieur de l'électrolyseur, ainsi que le mélange des gaz formés.

A cet égard, il est noté qu'une conception sensiblement similaire se retrouve sur une pile à combustible fonctionnant à haute température, étant donné qu'elle fonctionne selon le principe inverse de celui de l'électrolyseur.

Pour assurer l'étanchéité mentionnée ci-dessus, plusieurs contraintes doivent être respectées, et en particulier l'application d'un faible effort pour la mise en place et le conditionnement du joint d'étanchéité, afin d'éviter d'endommager / de rompre l'électrolyte fragile en céramique. Or ce faible effort requis est incompatible avec les solutions métalliques, étant donné que celles-ci nécessitent une plastification de leurs surfaces de contact pour assurer l'étanchéité voulue, et que cette opération requiert généralement l'application d'efforts importants. De plus, le joint d'étanchéité métallique ainsi déformé plastiquement, par efforts élevés, n'est parfois pas capable d'assurer l'étanchéité durant toute la période requise, pour des raisons de fluage du matériau constituant le joint.

Pour remédier au moins partiellement à ces inconvénients, l'invention a pour objet un joint d'étanchéité destiné à être interposé entre un premier et un second éléments, ledit joint comprenant deux portions de contact espacées l'une de l'autre selon une direction d'espacement, respectivement destinées à contacter de façon étanche lesdits premier et second éléments, lesdites portions de contact étant réalisées dans un premier alliage présentant des propriétés de superplasticité dans des conditions prédéterminées de sollicitation parmi lesquelles des conditions prédéterminées de température, lesdites portions de contact étant portées par un support disposé entre celles-ci, réalisé de manière à présenter, dans lesdites conditions prédéterminées de température, une résistance mécanique à la compression dans ladite direction d'espacement supérieure à celle desdites portions de contact.

L'invention présente globalement l'avantage d'offrir un compromis très satisfaisant entre le niveau d'étanchéité capable d'être obtenu avec la combinaison des moyens spécifiques employés, et le faible niveau d'efforts requis pour atteindre ce niveau d'étanchéité.

Avec une telle conception, le conditionnement du joint d'étanchéité entre les deux éléments à étancher peut avantageusement s'effectuer en sollicitant les portions de contact dans lesdites conditions prédéterminées de sollicitation, en particulier en ce qui concerne la température et la vitesse de déformation / d'écrasement, afin de bénéficier des propriétés de superplasticité du premier alliage composant ces portions de contact. Dans un tel cas, le support résistant quant à lui mieux à la compression à ce niveau de température, permet d'éviter l'affaissement des portions de contact lors du conditionnement, et favorise donc l'écrasement de celles-ci entre les éléments à étancher et ce support ne se déformant que faiblement dans la direction d'espacement. Les portions de contact peuvent alors se déformer localement dans des proportions très importantes lors du conditionnement du joint visant notamment à exercer une pression, dans la direction d'espacement, entre les deux éléments destinés à être étanchés. Les déformations importantes recherchées favorisent une étanchéité renforcée, puisque ces dernières permettent de corriger de manière performante les défauts de surfaces, les défauts d'alignement, et permettent également de combler les rugosités / aspérités des surfaces des deux éléments concernés, entre lesquels une étanchéité est recherchée.

En d'autres termes, l'invention permet d'obtenir une étanchéité renforcée grâce aux déformations importantes des portions de contact, et ce, avantageusement, sous faible effort grâce leurs propriétés de superplasticité. Les éléments concernés ne subissent de ce fait que de faibles efforts pendant le conditionnement du joint d'étanchéité, réalisé de manière à ce que les portions de contact soient sollicitées dans lesdites conditions prédéterminées de sollicitation, en particulier lesdites conditions prédéterminées de température et des conditions prédéterminées de vitesse d'écrasement, de sorte que leur risque d'endommagement / de rupture est fortement limité, même lorsque l'un et/ou l'autre de ces éléments est réalisé dans un matériau fragile, en céramique par exemple.

A ce titre, il est noté que le niveau d'efforts introduit dans les deux éléments lors du conditionnement du joint, est environ vingt fois inférieur à celui requis pour obtenir un niveau d'étanchéité sensiblement similaire, avec une solution classique de joint métallique.

Par ailleurs, quand la température du joint d'étanchéité est ultérieurement portée en dessous desdites conditions prédéterminées de température relatives à l'état superplastique du premier alliage, tout en restant à haute température et sous contrainte, l'étanchéité obtenue est conservée, notamment grâce à la grande résistance mécanique procurée par le support du joint, en particulier par son absence de fluage sous un faible niveau de contrainte.

A titre indicatif, il est noté qu'un alliage est réputé offrir des propriétés de superplasticité lorsque sa capacité d'allongement, dans des conditions prédéterminées, atteint 200%, en pouvant aller jusqu'à des valeurs de l'ordre de 2000%, ou plus. Parmi les conditions prédéterminées, il y a celles concernant la température, indiquées ci-dessus, cette température devant généralement être supérieure ou égale à la moitié de la température de fusion de l'alliage concerné. Il y a également une vitesse faible de déformation / d'écrasement, de l'ordre par exemple de 10⁻³ à 10⁻⁵ s⁻¹, ainsi que des contraintes faibles par rapport à celles appliquées aux matériaux standards au cours des procédés conventionnels, tels que la mise en forme par emboutissage, forgeage, etc. Toujours à titre indicatif, une des caractéristiques de ces alliages est généralement d'avoir une taille fine de grains, alliage qui reste stable au cours de sa déformation superplastique.

Plusieurs alliages superplastiques peuvent être envisagés pour les portions de contact, parmi lesquels un alliage comprenant les éléments Fe, Ni dans une proportion de 50 à 55%, Cr dans une proportion de 17 à 21%, Nb dans une proportion de 4,75 à 5,25%, Mo dans une proportion de 2,8 à 3,3%, et Ti dans une proportion de 0,65 à 1,15%, et présentant de préférence des propriétés de superplasticité aux alentours de 950°C, les alliages appartenant à la famille dénommée Inconel^{®} 718 SPF répondant à cette définition.

D'autres alliages superplastiques peuvent néanmoins être envisagés, comme des alliages à base de titane et/ou d'aluminium, avec des propriétés de superplasticité à des températures ou intervalles de températures compris entre 500°C et 1000°C.

Pour ce qui concerne le support du joint d'étanchéité, celui-ci est préférentiellement métallique, réalisé dans un second alliage, par exemple l'alliage dénommé Inconel^{®} 718. Ce dernier alliage, ne présentant pas de propriétés superplastiques, présente cependant des propriétés élastiques ainsi que des propriétés de grande résistance mécanique à haute température, tout comme le premier alliage. Comme mentionné ci-dessus, il est néanmoins fait en sorte qu'aux conditions prédéterminées de température relatives à l'état superplastique du premier alliage, le second alliage offre une résistance mécanique à la compression supérieure à celle du premier alliage, afin d'éviter l'affaissement des portions de contact durant le conditionnement du joint, et, donc, de privilégier l'écrasement des portions de contact superplastiques. A titre indicatif, il est noté que la résistance à la compression du support, dans ladite direction d'espacement des portions de contact, est, de préférence, prévue pour être supérieure à celle de ces portions de contact, quel que soit le mode de sollicitation mis en oeuvre aux conditions prédéterminées de température. Cette caractéristique est en particulier vérifiée lorsque le mode de sollicitation / d'écrasement retenu pour le joint permet d'obtenir lesdites conditions prédéterminées de vitesse d'écrasement pour les portions de contact.

On prévoit préférentiellement que dans lesdites conditions prédéterminées de superplasticité, la limite d'élasticité est environ dix fois plus faible pour les portions de contact que pour le support dans le second alliage.

De préférence, le joint comprend des moyens autorisant un déplacement relatif entre lesdites deux portions de contact, selon une direction radiale orthogonale à la direction d'espacement entre ces deux portions de contact. Tout d'abord, cela implique que le joint est réalisé de sorte que la direction d'espacement corresponde à la direction axiale, même si cela pourrait en être autrement. En particulier, la direction d'espacement des portions de contact pourrait alternativement correspondre à la direction radiale du joint, sans sortir du cadre de l'invention.

Dans le premier cas évoqué ci-dessus, il est donc de préférence prévu une certaine flexibilité du joint dans cette direction radiale, par opposition à la recherche d'une grande rigidité dans la direction d'espacement ou direction axiale, requise pour le maintien de l'étanchéité. Différentes solutions techniques peuvent être envisagées pour atteindre un tel but, dont certaines seront décrites ci-dessous.

D'une manière générale, l'autorisation de ce mouvement relatif entre les portions de contact, selon la direction radiale, permet d'accompagner les éventuels mouvements relatifs des deux éléments dans la même direction, susceptibles de résulter par exemple d'une dilatation thermique différentielle. Néanmoins, il est noté que l'invention ne s'applique pas uniquement à des cas où les deux éléments agencés de part et d'autre du joint d'étanchéité présentent des coefficients de dilatation thermique différents, même si il s'agit d'une application préférée, notamment pour le domaine des systèmes à cellules électrochimiques.

Selon un premier mode de réalisation préféré de la présente invention, lesdites deux portions de contact sont réalisées d'un seul tenant avec une portion intermédiaire les raccordant, pour former conjointement une structure extérieure du joint d'étanchéité.

Dans un tel cas, on prévoit de préférence que ladite portion intermédiaire de la structure extérieure du joint d'étanchéité dispose d'une section en forme de C, de double C ou de ∑, ou encore de toute autre forme permettant sa déformation aisée, dans la direction radiale. Par conséquent, il est à comprendre que la portion intermédiaire flexible, portant les deux portions de contact, constitue tout ou partie des moyens précités autorisant un déplacement relatif entre les deux portions de contact, selon une direction radiale.

De préférence, ledit support est agencé dans ladite structure extérieure, au droit et au contact des deux portions de contact. Dans un tel cas, on prévoit préférentiellement que ledit support présente avec lesdites deux portions de contact de ladite structure extérieure, respectivement deux liaisons mécaniques sans glissement. Ces liaisons, pas nécessairement étanches, peuvent être de simples appuis, ou encore des liaisons rigides telles que des liaisons par soudage.

Toujours de manière préférée, ledit support prend en section la forme d'un C étiré dans le sens de sa hauteur, les deux portions d'extrémité du C étant en contact respectivement avec lesdites deux portions de contact.

Avec une telle configuration, en cas de dilatation thermique différentielle des deux éléments, les deux portions de contact peuvent être déplacées relativement l'une par rapport à l'autre dans la direction radiale, par déformation / flexion de la structure extérieure, et plus particulièrement de sa portion intermédiaire. Dans un même temps, il ne se produit aucun déplacement entre les portions de contact et leurs éléments associés, ni entre ces mêmes portions et le support disposé intérieurement dans la structure extérieure, de sorte que l'étanchéité est parfaitement conservée, notamment toujours grâce à la rigidité axiale procurée par le support entre les deux portions de contact. Il est noté que la liaison sans glissement entre chaque portion de contact et le support n'est pas nécessaire, le but étant néanmoins de pouvoir faire en sorte que ce support exerce toujours une force suffisante sur les portions de contact pour maintenir l'étanchéité, et donc pour interdire le glissement de ces portions sur les éléments entre lesquels une étanchéité est recherchée, même en cas de déplacement relatif des deux éléments selon la direction radiale.

Selon un second mode de réalisation préféré de la présente invention, lesdites deux portions de contact sont reliées entre elles par deux flancs latéraux opposés, formant conjointement avec lesdites deux portions de contact une structure extérieure du joint d'étanchéité. De préférence, ladite structure extérieure du joint d'étanchéité dispose d'une section en forme générale de rectangle ou de carré.

Dans un tel cas, ledit support est préférentiellement agencé dans ladite structure extérieure, au droit et au contact des deux portions de contact, de préférence de sorte que ce support présente, avec lesdites deux portions de contact de ladite structure extérieure, respectivement deux liaisons mécaniques avec glissement.

Toujours préférentiellement, ledit support présente une forme sensiblement tubulaire, ses deux faces d'extrémité opposées étant respectivement en contact avec les deux portions de contact.

Enfin, on prévoit que chaque flanc latéral est rapporté à ses extrémités sur les deux portions de contact, respectivement par l'intermédiaire de deux liaisons mécaniques étanches et flexibles.

Avec une telle configuration, en cas de dilatation thermique différentielle des deux éléments, les deux portions de contact peuvent être déplacées relativement l'une par rapport à l'autre dans la direction radiale, par déformation / flexion de la structure extérieure, et plus particulièrement par déformation des liaisons mécaniques précitées, et inclinaisons des flancs latéraux associés. En d'autres termes, la section carrée ou rectangulaire de la structure extérieure, adoptée en conditions normales, se transforme légèrement en une section du type parallélogramme. Cette déformation en parallélogramme est autorisée par le glissement de l'une et/ou de l'autre des portions de contact le long de son extrémité de support associée, tandis que dans ce même temps, il ne se produit aucun déplacement entre les portions de contact et leurs éléments associés. Par conséquent, l'étanchéité est parfaitement conservée, notamment toujours grâce à la rigidité axiale procurée par le support entre les deux portions de contact.

Ainsi, pour ce second mode, les moyens autorisant un déplacement relatif entre les deux portions de contact, selon une direction radiale, sont basés sur le principe de glissement entre les éléments constitutifs du joint, combiné à une déformation de la structure extérieure.

De préférence, quel que soit le mode de réalisation préféré adopté, le joint présente une forme sensiblement annulaire.

L'invention se rapporte également à un assemblage quelconque comprenant au moins un joint d'étanchéité tel que décrit ci-dessus, interposé entre un premier et un second éléments, ledit assemblage constituant par exemple une partie d'un système à cellules électrochimiques. De préférence, les premier et second éléments sont respectivement réalisés dans des matériaux présentant des coefficients de dilatation thermique différents. Par exemple, les premier et second éléments sont respectivement métallique et en céramique, comme cela est habituellement le cas pour les systèmes à cellules électrochimiques, du type électrolyseur et/ou pile à combustible fonctionnant à haute température.

A cet égard, l'invention a également pour objet un système à cellule électrochimique comprenant au moins un joint d'étanchéité tel que décrit ci-dessus. De préférence, il comprend au moins une cellule électrochimique pourvue d'une anode, d'une cathode, ainsi que d'un électrolyte agencé entre l'anode et la cathode, un interconnecteur anodique et un interconnecteur cathodique étant associés à ladite cellule électrochimique, reliés respectivement à l'anode et à la cathode, ledit système comprenant également au moins un joint d'étanchéité tel que décrit ci-dessus, placé entre ledit électrolyte et l'interconnecteur anodique, et/ou entre ledit électrolyte et l'interconnecteur cathodique. De préférence, deux joints distincts sont respectivement prévus pour les deux emplacements précités.

Comme mentionné ci-dessus, le système peut être un électrolyseur haute température, ou une pile à combustible fonctionnant à haute température, par exemple du type SOFC.

Enfin, l'invention a également pour objet un procédé de mise en place d'un joint d'étanchéité tel que décrit ci-dessus, destiné à être interposé entre un premier et un second éléments d'un système à cellule électrochimique fonctionnant à une température de fonctionnement inférieure auxdites conditions prédéterminées de température, ledit procédé comprenant les étapes suivantes:
- mise en place du joint d'étanchéité entre les premier et second éléments ;
- augmentation de la température de manière à porter le joint à une température de conditionnement s'inscrivant dans lesdites conditions prédéterminées de température ;
- maintien de la température à ladite température de conditionnement et application d'une pression sur ledit système à cellule électrochimique, de manière à obtenir un écrasement desdites portions de contact du joint ; et
- diminution de la température de manière à porter le joint à ladite température de fonctionnement du système, tout en maintenant une pression sur ledit système à cellule électrochimique.

Bien entendu, la pression sur ledit système à cellule électrochimique est préférentiellement appliquée d'une manière telle qu'il en résulte une sollicitation des portions de contact dans lesdites conditions prédéterminées de déformation / d'écrasement, permettant ainsi de bénéficier des propriétés de superplasticité du premier alliage composant ces portions de contact.

De préférence, ladite température de conditionnement est fixée aux alentours de 950°C, et plus généralement entre 500°C et 1000°C selon les matériaux choisis, et ladite température de fonctionnement est fixée aux alentours de 800°C, et plus généralement entre 600 et 850°C, tout en restant toujours inférieure à ladite température de conditionnement.

D'autres avantages et caractéristiques de l'invention apparaîtront dans la description détaillée, non limitative, ci-dessous.

La description sera faite au regard des dessins annexés parmi lesquels:
- la figure 1 représente une vue schématique en coupe d'une cellule électrochimique d'un électrolyseur haute température, coopérant de part et d'autre avec des interconnecteurs par l'intermédiaire de deux joints d'étanchéité selon la présente invention ;
- la figure 2 représente une vue détaillée en coupe de l'un des deux joints montrés sur la figure 1, le joint se présentant sous la forme d'un premier mode de réalisation préféré de la présente invention, dans une configuration non contrainte ;
- les figures 3a et 3b représentent des vues schématisant plusieurs étapes successives d'un procédé de mise en place du joint d'étanchéité montré sur la figure 2, selon un mode de réalisation préféré de la présente invention:

- la figure 4 représente une vue détaillée en coupe de l'un des deux joints montrés sur la figure 1, le joint se présentant sous la forme d'un second mode de réalisation préféré de la présente invention, dans une configuration non contrainte ; et
- les figures 5a et 5b représentent des vues schématisant plusieurs étapes successives d'un procédé de mise en place du joint d'étanchéité montré sur la figure 4, selon un mode de réalisation préféré de la présente invention.

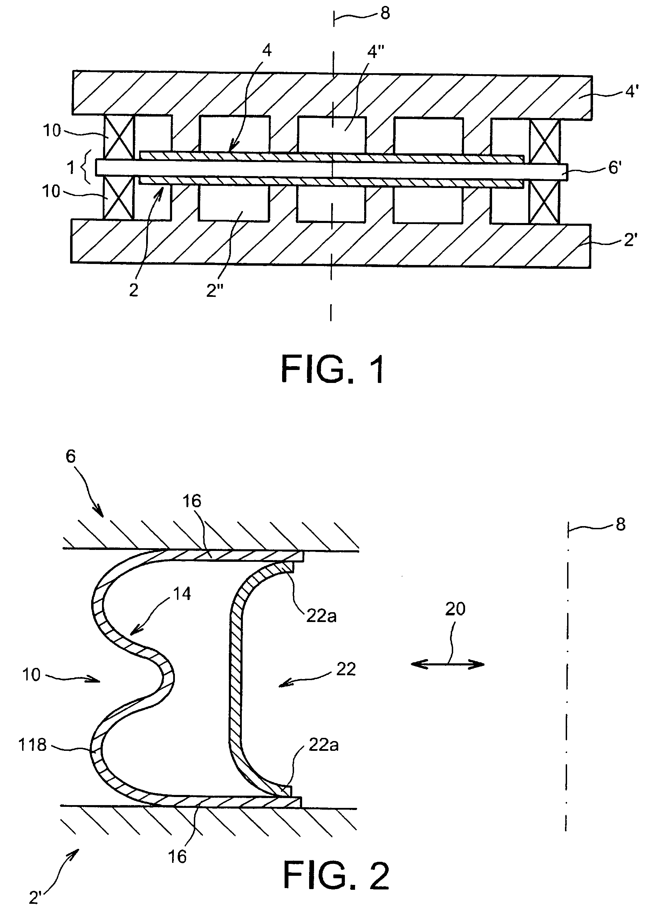

En référence tout d'abord à la figure 1, on peut apercevoir schématiquement une cellule électrochimique 1 d'un électrolyseur haute température, de préférence de géométrie dite plane.

Sa conception générale est connue, à savoir qu'elle comprend une anode poreuse 2, une cathode poreuse 4, ainsi qu'un électrolyte 6 agencé en contact entre l'anode et la cathode. Ces pièces, de préférence de forme circulaire, sont empilées selon une direction d'empilement correspondant à leur axe 8.

A cette cellule 6, est associé un interconnecteur anodique 2' plaqué contre l'anode, et définissant avec celle-ci une chambre ou compartiment anodique 2" à travers lequel le fluide peut circuler. De la même manière, il est prévu un interconnecteur cathodique 4' plaqué contre la cathode, et définissant avec celle-ci une chambre ou compartiment cathodique 4" à travers lequel le fluide peut circuler.

De façon classique, les interconnecteurs 2', 4' sont métalliques, tandis que l'électrolyte solide est en céramique.

Pour assurer l'étanchéité des compartiments 2", 4", il est prévu un joint d'étanchéité 10 entre l'électrolyte 6 et l'interconnecteur 2', ainsi qu'un autre joint d'étanchéité 10, de conception identique ou similaire, entre l'électrolyte 6 et l'interconnecteur 4'. Ces joints sont de préférence annulaires, d'axe 8, agencés en périphérie de l'empilement, et plus particulièrement radialement vers l'extérieur par rapport à l'anode et à la cathode.

La particularité de l'invention réside dans la conception de ces joints d'étanchéité 10, dont l'un va être décrit ci-dessous, à travers deux modes de réalisation préférés.

Tout d'abord en référence à la figure 2 représentant un premier mode de réalisation préféré de la présente invention, on voit que le joint 10 présente une structure extérieure 14 d'un seul tenant, aux extrémités duquel se trouvent respectivement deux portions de contact 16. Ces deux portions 16 sont respectivement en contact extérieur avec la surface inférieure de l'électrolyte 6, et avec la surface supérieure de l'interconnecteur anodique 2', les contacts étanches étant de préférence surfaciques, et encore plus préférentiellement plans et annulaires, orthogonaux à l'axe 8.

Les portions 16, espacées l'une de l'autre selon une direction d'espacement correspondant à la direction axiale 8, sont reliées l'une à l'autre par une portion intermédiaire 18, présentant une flexibilité dans une direction radiale représentée schématiquement par la flèche 20, et orthogonale et sécante à l'axe 8. Pour assurer cette flexibilité, on fait de préférence en sorte que cette portion 18 dispose d'une section en forme de double C comme montrée sur la figure 2, bien que d'autres formes assurant une telle flexibilité peuvent être envisagées, sans sortir du cadre de l'invention.

Cette structure extérieure 14 d'une seul tenant est réalisée dans un premier alliage présentant des propriétés de superplasticité dans des conditions prédéterminées de sollicitation, à savoir des conditions prédéterminées de température et des conditions prédéterminées de vitesse de déformation / d'écrasement. De manière préférée, il s'agit d'un alliage comprenant les éléments Fe, Ni dans une proportion de 50 à 55%, Cr dans une proportion de 17 à 21%, Nb dans une proportion de 4,75 à 5,25%, Mo dans une proportion de 2,8 à 3,3%, et Ti dans une proportion de 0,65 à 1,15%, et présentant de préférence des propriétés de superplasticité aux alentours de 950°C, tels que les alliages appartenant à la famille dénommée Inconel^{®} 718 SPF.

Le joint 10 est complété par un support de joint 22, disposé intérieurement dans la structure 14, au droit et au contact des deux portions 16. Il présente de préférence en section la forme d'un C étiré dans le sens de sa hauteur, ici la direction de l'axe 8, les deux portions d'extrémité 22a du C étant en contact respectivement avec les surfaces intérieures en regard des deux portions de contact 16.

Si la forme du support 22 peut être autre que celle indiquée ci-dessus, elle est retenue de manière à offrir une rigidité dans la direction de l'axe 8, même à haute température, c'est-à-dire au-delà de 500°C. De façon générale, dans les conditions prédéterminées de température relatives à l'état superplastique du premier alliage, donc de préférence aux alentours de 950°C, ce support 22 est prévu pour offrir une résistance mécanique à la compression, selon la direction axiale 8, supérieure à celle des portions 16, afin d'éviter leur affaissement, et surtout dans le but de presser celles-ci en direction de leurs éléments associés 2, 6, afin d'établir l'étanchéité comme cela sera plus détaillé ci-après.

De préférence, le support est réalisé avec un second alliage, tel que l'alliage dénommé Inconel^{®} 718, avec de préférence, dans les conditions prédéterminées de sollicitation de superplasticité du premier alliage, la limite d'élasticité environ dix fois plus élevée pour le support que pour ces mêmes portions.

De préférence, les extrémités 22a du support 22 présentent chacune, avec leur portion 16 associée, une liaison mécanique de préférence sans glissement. Il peut s'agir d'une liaison rigide ou d'un simple appui, s'étendant dans les deux cas de manière annulaire, centrée sur l'axe 8.

Le procédé de mise en place du joint 10 entre l'électrolyte 6 et l'interconnecteur 2' est tout d'abord initié par son positionnement à froid entre ces deux éléments, comme cela a été schématisé sur la figure 2. Un faible jeu peut alors exister à ce stade, entre le joint 10 et l'un des éléments 2', 6. Ensuite, l'ensemble placé dans un four muni d'une presse est soumis à une augmentation de la température, de manière à atteindre une température de conditionnement de l'ordre de 950°C, s'inscrivant dans les conditions prédéterminées de température associées relatives au domaine superplastique du premier alliage. Une fois cette température de conditionnement atteinte dans le four, les différents composants de l'ensemble qui se sont dilatés thermiquement librement les uns par rapport aux autres, en particulier dans la direction radiale, sont maintenus à cette température de conditionnement, tout en étant soumis à un effort de pression appliqué par la presse du four, ou par tout autre moyen connu de l'homme du métier.

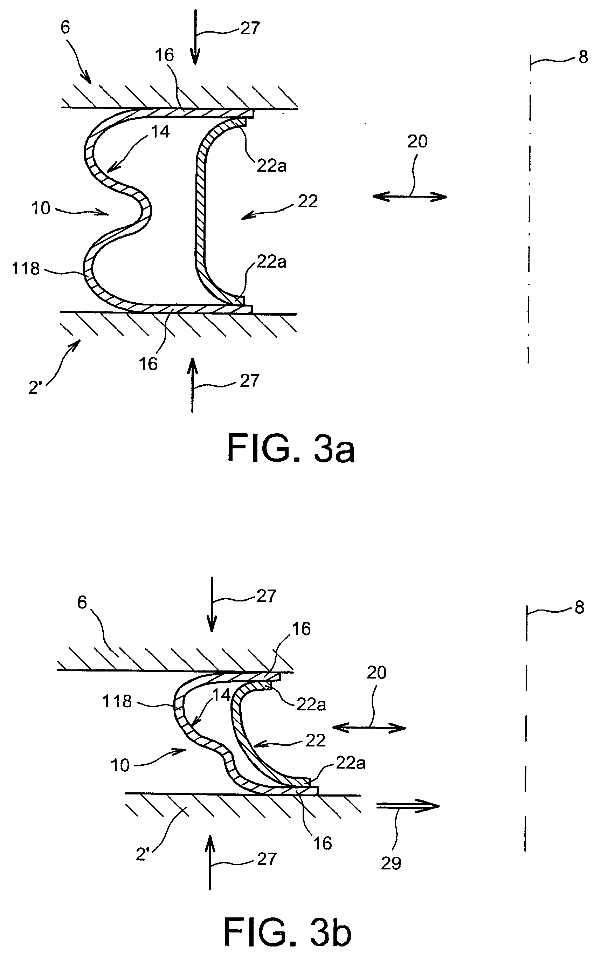

Cet effort de pression selon l'axe 8 est exercé sur le système à cellule électrochimique de manière telle qu'il en résulte une sollicitation des portions de contact 16 dans les conditions prédéterminées de déformation / d'écrasement, à savoir à de faibles vitesses, permettant ainsi de bénéficier des propriétés de superplasticité du premier alliage composant ces portions de contact. Cette étape de mise en pression à la température de conditionnement, schématisée par les flèches 27 de la figure 3a, est mise en oeuvre jusqu'à ce que le niveau souhaité de déformation des portions de contact 16 soit atteint, celui-ci correspondant au niveau d'étanchéité requis. En revanche durant cette étape, en raison de sa résistance mécanique importante selon l'axe 8, le support 22 n'est que très peu comprimé, et favorise donc la compression des portions de contact 16 qu'il supporte à ses extrémités.

A titre indicatif, l'effort de pression appliqué le long d'une ligne circulaire, au droit du joint, peut être de l'ordre de 3 N/mm, et manoeuvré de manière à obtenir une vitesse d'écrasement des portions 16 entre de 10⁻³ à 10⁻⁵ s⁻¹.

Ensuite, la température du four est diminuée à la température de fonctionnement du système à cellule électrochimique, soit environ 800°C, tout en maintenant un effort de pression qui est de préférence le même que celui adopté durant l'étape précédente, même si il pourrait en être autrement, sans sortir du cadre de l'invention.

Durant cette diminution de la température, il est observé une dilatation thermique différentielle des deux éléments 2', 6 dans la direction radiale 20, l'effet de cette dilatation différentielle dans la direction axiale restant négligeable.

Plus précisément, comme cela a été schématisé de façon volontairement exagérée pour des raisons de clarté sur la figure 3b, l'interconnecteur 2' a tendance à plus se rétracter vers l'axe 8 que l'électrolyte 6, tel que cela est schématisé par la flèche 29. Il en résulte un déplacement des deux portions de contact 16 relativement l'une par rapport à l'autre dans la direction radiale 20, ce déplacement étant autorisé par la déformation / flexion de la portion intermédiaire 18 de la structure extérieure 14. Les courbures de cette portion intermédiaire 18 ont tendance à s'aplatir, comme visible sur la figure 3b. Simultanément, il ne se produit aucun déplacement entre les portions de contact 16 et leurs éléments associés 2', 6, ni entre ces mêmes portions 16 et le support 22, de sorte que l'étanchéité est parfaitement conservée, notamment toujours grâce à la rigidité axiale procurée par ce même support 22. De préférence, durant la dilatation thermique différentielle, il n'est observé aucun glissement entre les portions de contact 16 et le support 22, même si un tel glissement pourrait être prévu, sans sortir du cadre de l'invention.

Une fois la température de fonctionnement atteinte, le joint 10 est fixé dans sa position déformée montrée sur la figure 3b, et toujours maintenu sous pression. Le système à cellule électrochimique peut alors fonctionner.

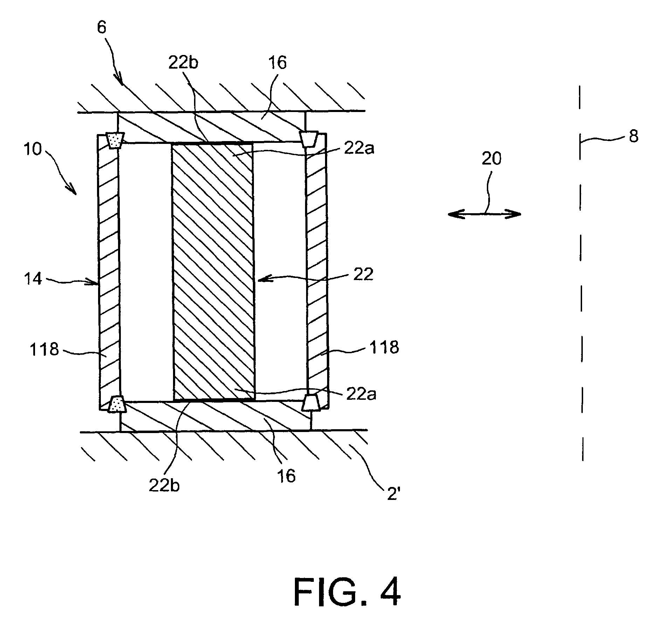

En référence à présent à la figure 4 représentant un second mode de réalisation préféré de la présente invention, on voit que le joint 10 présente une structure extérieure 14, aux extrémités de laquelle se trouvent respectivement deux portions de contact 16. Ces deux portions 16 sont respectivement en contact extérieur avec la surface inférieure de l'électrolyte 6, et avec la surface supérieure de l'interconnecteur 2', les contacts étanches étant de préférence surfaciques, et encore plus préférentiellement plans et annulaires, orthogonaux à l'axe 8.

Les portions 16, toujours espacées l'une de l'autre selon une direction d'espacement correspondant à la direction axiale 8, sont reliées l'une à l'autre par deux flancs latéraux 118, l'un intérieur l'autre extérieur, de forme annulaire et chacun centré sur l'axe 8. Ces flancs 118, s'étendant axialement, c'est-à-dire selon la direction de l'axe 8, sont chacun fixé à leurs extrémités respectivement aux deux portions 16, sur des extrémités radiales de celles-ci. Par conséquent, à l'état non contraint de la structure extérieure 14 montré sur la figure 4, celle-ci présente une section en forme générale de rectangle ou de carré. La liaison mécanique adoptée entre les extrémités radiales des portions 16 et les extrémités axiales des flancs 118 est préférentiellement étanche et flexible, par exemple du type soudage.

De plus, le flanc latéral extérieur est sensiblement déporté radialement vers l'extérieur par rapport aux portions de contact 16, tandis que le flanc latéral intérieur est sensiblement déporté radialement vers l'intérieur par rapport à ces portions. Cela permet une déformation dite « en parallélogramme » de la structure extérieure 14, permettant donc sa flexibilité dans la direction radiale 20, et donc l'accompagnement d'un éventuel mouvement radial relatif entre l'interconnecteur anodique 2' et l'électrolyte 6, comme cela sera détaillé par la suite.

Les portions 16 de la structure extérieure 14 sont réalisées dans le premier alliage superplastique décrit ci-dessus, tandis que les flancs peuvent être réalisés dans tout alliage compatible avec un soudage au matériau superplastique, le plus simple s'avérant être l'utilisation du même alliage superplastique que celui des portions de contact 16.

Le joint 10 est complété par un support de joint 22, disposé intérieurement dans la structure 14, au droit et au contact des deux portions 16. Il présente de préférence une forme tubulaire, par exemple une bague d'axe 8 ayant une section carrée ou rectangulaire, dont les deux faces opposées 22b, 22b d'extrémité axiale 22a, 22a, de préférence planes et orthogonales à cet axe 8, par déformation / flexion de la structure extérieure, et plus particulièrement par déformation des liaisons mécaniques précitées, et inclinaisons des flancs latéraux associés. En d'autres termes, la section carrée ou rectangulaire de la structure extérieure, adoptée en conditions normales, se transforme légèrement en une section du type parallélogramme. Cette déformation en parallélogramme est autorisée par le glissement de l'une et/ou de l'autre des portions de contact le long de sa portion de contact associée, tandis que dans ce même temps, il ne se produit aucun déplacement entre les portions de contact 16 et leurs éléments associés 2', 6. Par conséquent, l'étanchéité est parfaitement conservée, notamment toujours grâce à la rigidité axiale procurée par le support entre les deux portions de contact.

Si la forme du support 22 peut être autre que celle indiquée ci-dessus, elle est ici également retenue de manière à offrir une rigidité dans la direction de l'axe 8, même à haute température, c'est-à-dire au-delà de 500°C. De façon générale, dans les conditions prédéterminées de température relatives à l'état superplastique du premier alliage, donc de préférence aux alentours de 950°C, ce support 22 est prévu pour offrir une résistance mécanique à la compression supérieure à celle des portions 16, afin d'éviter leur affaissement, et surtout dans le but de presser celles-ci en direction de leurs éléments associés 2, 6.

De préférence, le support 22 est réalisé avec le second alliage cité ci-dessus.

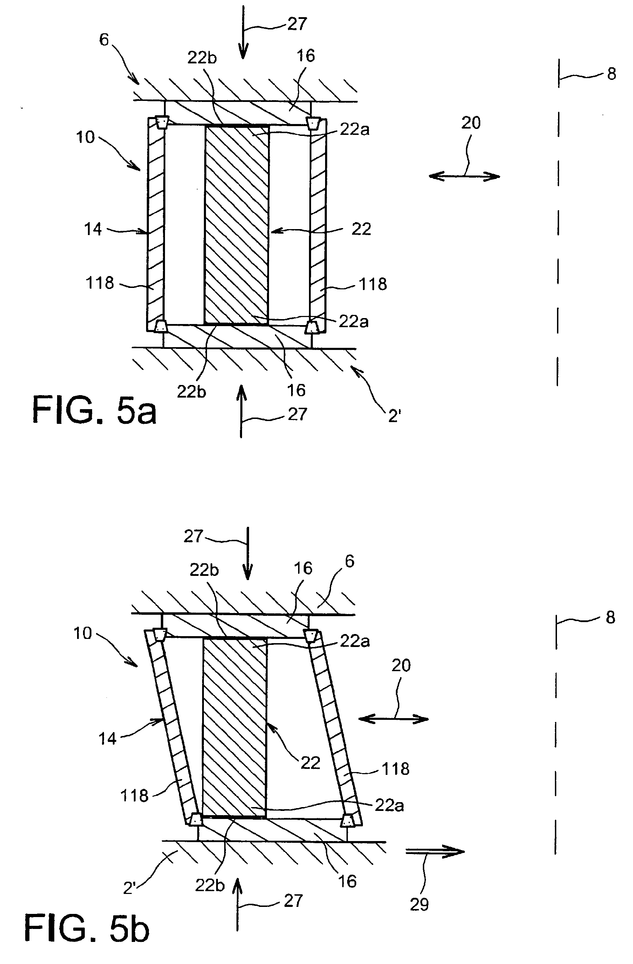

Le procédé de mise en place de ce joint est analogue à celui décrit ci-dessus, notamment en ce sens qu'il comprend successivement le positionnement du joint entre les éléments 2', 6, la montée en température jusqu'à l'obtention de la température de conditionnement, le maintien à la température de conditionnement couplé à une mise en pression schématisée sur la figure 5a par les flèches 27, servant à déformer sous faibles contraintes les portions de contact 16 afin d'obtenir l'étanchéité requise, puis la diminution de la température du four à la température de fonctionnement, en maintenant la pression, et avant de faire fonctionner le système à cellule électrochimique.

La différence réside ici dans le comportement du joint 10 durant l'étape de diminution de la température, au cours de laquelle il est observé une dilatation thermique différentielle des deux éléments 2', 6, dans la direction radiale 20, avec l'interconnecteur 2' se rétractant plus vers l'axe 8 que l'électrolyte 6, comme schématisé par la flèche 29. Il en résulte aussi un déplacement des deux portions de contact 16 relativement l'une par rapport à l'autre dans la direction radiale 20, par déformation des liaisons mécaniques précitées, et inclinaisons des flancs latéraux associés 118. Plus précisément, la section carrée ou rectangulaire de la structure 118, 118, 16, 16, adoptée en conditions non contraintes, se transforme légèrement en une section du type parallélogramme. Cette déformation en parallélogramme est autorisée par le glissement de l'une et/ou de l'autre des portions de contact 16 le long de sa face associée 22b d'extrémité axiale 22a du support. Simultanément, il ne se produit avantageusement aucun déplacement entre les portions de contact 16 et leurs éléments associés 2', 6. Ainsi, l'étanchéité est parfaitement conservée, notamment toujours grâce à la rigidité axiale procurée par le support 22 entre les deux portions de contact 16, et grâce au glissement entre les éléments constitutifs du joint.

Bien entendu, diverses modifications peuvent être apportées par l'homme du métier à l'invention qui vient d'être décrite, dans la limite de l'objet des revendications.

## Revendications

1. Joint d'étanchéité (10) destiné à être interposé entre un premier et un second éléments, ledit joint comprenant deux portions de contact (16) espacées l'une de l'autre selon une direction d'espacement, respectivement destinées à contacter de façon étanche lesdits premier et second éléments, lesdites portions de contact (16) étant réalisées dans un premier alliage présentant des propriétés de superplasticité dans des conditions prédéterminées de sollicitation parmi lesquelles des conditions prédéterminées de température et de vitesse de déformation, ladite vitesse de déformation étant comprise entre de 10⁻³ à 10⁻⁵ s⁻¹, lesdites portions de contact (16) étant portées par un support (22) disposé entre celles-ci, réalisé de manière à présenter, dans lesdites conditions prédéterminées de sollicitation, une résistance mécanique à la compression dans ladite direction d'espacement supérieure à celle desdites portions de contact (16) **caractérisé en ce que**
ledit premier alliage est un alliage comprenant les éléments Fe, Ni dans une proportion de 50 à 55%, Cr dans une proportion de 17 à 21%, Nb dans une proportion de 4,75 à 5,25%, Mo dans une proportion de 2,8 à 3,3%, et Ti dans une proportion de 0,65 à 1,15%, cet alliage présentant des propriétés de superplasticité aux alentours de 950°C.

2. Joint d'étanchéité selon la revendication 1, **caractérisé en ce qu'**il comprend des moyens autorisant un déplacement relatif entre lesdites deux portions de contact (16), selon une direction radiale (20) orthogonale à ladite direction d'espacement.

3. Joint d'étanchéité selon la revendication 2, **caractérisé en ce que** lesdites deux portions de contact (16) sont réalisées d'un seul tenant avec une portion intermédiaire (18) les raccordant, pour former conjointement une structure extérieure (14) du joint d'étanchéité.

4. Joint d'étanchéité selon la revendication 3, **caractérisé en ce que** ladite portion intermédiaire (18) de la structure extérieure du joint d'étanchéité dispose d'une section en forme de C, de double C ou de Σ.

5. Joint d'étanchéité selon la revendication 3 ou la revendication 4, **caractérisé en ce que** ledit support (22) est agencé dans ladite structure extérieure (14), au droit et au contact des deux portions de contact (16).

6. Joint d'étanchéité selon la revendication 5, **caractérisé en ce que** ledit support (22) présente avec lesdites deux portions de contact (16) de ladite structure extérieure (14), respectivement deux liaisons mécaniques sans glissement.

7. Joint d'étanchéité selon l'une quelconque des revendications 3 à 6, **caractérisé en ce que** ledit support (22) prend en section la forme d'un C étiré dans le sens de sa hauteur, les deux portions d'extrémité du C (22a) étant en contact respectivement avec lesdites deux portions de contact (16).

8. Joint d'étanchéité selon la revendication 1 ou la revendication 2, **caractérisé en ce que** lesdites deux portions de contact (16) sont reliées entre elles par deux flancs latéraux opposés (118), formant conjointement avec lesdites deux portions de contact (16) une structure extérieure (14) du joint d'étanchéité.

9. Joint d'étanchéité selon la revendication 8, **caractérisé en ce que** ladite structure extérieure (14) du joint d'étanchéité dispose d'une section en forme générale de rectangle ou de carré.

10. Joint d'étanchéité selon la revendication 8 ou la revendication 9, **caractérisé en ce que** ledit support (22) est agencé dans ladite structure extérieure (14), au droit et au contact des deux portions de contact (16).

11. Joint d'étanchéité selon la revendication 10, **caractérisé en ce que** ledit support (22) présente avec lesdites deux portions de contact (16) de ladite structure extérieure (14), respectivement deux liaisons mécaniques avec glissement.

12. Joint d'étanchéité selon l'une quelconque des revendications 8 à 11, **caractérisé en ce que** ledit support (22) présente une forme sensiblement tubulaire, ses deux faces d'extrémité opposées (22b, 22b) étant respectivement en contact avec les deux portions de contact (16).

13. Joint d'étanchéité selon l'une quelconque des revendications 8 à 12, **caractérisé en ce que** chaque flanc latéral (118) est rapporté à ses extrémités sur les deux portions de contact (16), respectivement par l'intermédiaire de deux liaisons mécaniques étanches et flexibles.

14. Joint d'étanchéité selon l'une quelconque des revendications précédentes, **caractérisé en ce que** ledit support (22) est métallique, réalisé dans un second alliage.

15. Joint d'étanchéité selon l'une quelconque des revendications précédentes, **caractérisé en ce qu'**il présente une forme sensiblement annulaire.

16. Assemblage comprenant au moins un joint d'étanchéité (10) selon l'une quelconque des revendications précédentes, interposé entre un premier et un second éléments (2', 6).

17. Assemblage selon la revendication 16, **caractérisé en ce que** les premier et second éléments (2', 6) sont respectivement réalisés dans des matériaux présentant des coefficients de dilatation thermique différents.

18. Assemblage selon la revendication 17, **caractérisé en ce que** les premier et second éléments sont respectivement métallique et en céramique.

19. Système à cellule électrochimique (1) comprenant au moins un joint d'étanchéité (10) selon l'une quelconque des revendications 1 à 15.

20. Système selon la revendication 19, **caractérisé en ce qu'**il comprend au moins une cellule électrochimique (1) pourvue d'une anode (2), d'une cathode (4), ainsi que d'un électrolyte (6) agencé entre l'anode et la cathode, un interconnecteur anodique (2') et un interconnecteur cathodique (4') étant associés à ladite cellule électrochimique (1), reliés respectivement à l'anode et à la cathode, ledit système comprenant également au moins un joint d'étanchéité (10) selon l'une quelconque des revendications 1 à 16, placé entre ledit électrolyte (6) et l'interconnecteur anodique (2'), et/ou entre ledit électrolyte (6) et l'interconnecteur cathodique (4').

21. Système selon la revendication 20, **caractérisé en ce qu'**il est un électrolyseur haute température, ou une pile à combustible fonctionnant à haute température.

22. Procédé de mise en place d'un joint d'étanchéité selon l'une quelconque des revendications 1 à 15, destiné à être interposé entre un premier et un second éléments d'un système à cellule électrochimique fonctionnant à une température de fonctionnement inférieure auxdites conditions prédéterminées de température, ledit procédé comprenant les étapes suivantes :
- mise en place du joint d'étanchéité entre les premier et second éléments ;
- augmentation de la température de manière à porter le joint à une température de conditionnement s'inscrivant dans lesdites conditions prédéterminées de température ;
- maintien de la température à ladite température de conditionnement et application d'une pression sur ledit système à cellule électrochimique, de manière à obtenir un écrasement desdites portions de contact du joint dans lesdites conditions prédéterminées de vitesse de déformation, à une vitesse de déformation comprise entre de 10⁻³ à 10⁻⁵ s⁻¹ ; et
- diminution de la température de manière à porter le joint à ladite température de fonctionnement du système, tout en maintenant une pression sur ledit système à cellule électrochimique.

23. Procédé selon la revendication 22, **caractérisé en ce que** ladite température de conditionnement est fixée aux alentours de 950°C, et **en ce que** ladite température de fonctionnement est fixée aux alentours de 800°C.

## Claims

1. Seal (10) intended to be inserted between a first and a second member, said seal comprising two contact portions (16) spaced from each other along a spacing direction, respectively intended to contact in a tight manner said first and second members, said contact portions (16) being made of a first alloy displaying superplasticity properties under predetermined stress conditions including predetermined temperature and compression rate conditions, said compression rate being comprised between 10⁻³ and 10⁻⁵ s⁻¹, said contact portions (16) being supported by a support (22) arranged therebetween, produced so as to display, under said predetermined stress conditions, a greater mechanical compression resistance in said spacing direction than that of said contact portions (16), **characterised in that** said first alloy is an alloy comprising the elements Fe, Ni in a proportion of 50 to 55%, Cr in a proportion of 17 to 21%, Nb in a proportion of 4.75 to 5.25%, Mo in a proportion of 2.8 to 3.3%, and Ti in a proportion of 0.65 to 1.15%, this alloy displaying superplasticity properties at around 950°C.

2. Seal according to claim 1, **characterised in that** it comprises means authorising a relative movement between said two contact portions (16), along a radial direction (20) orthogonal to said spacing direction.

3. Seal according to claim 2, **characterised in that** said two contact portions (16) are made of one piece with an intermediate portion (18) connecting them, to jointly form an external seal structure (14).

4. Seal according to claim 3, **characterised in that** said intermediate portion (18) of the external seal structure to have a cross-section in the shape of a C, double C or Σ.

5. Seal according to claim 3 or claim 4, **characterised in that** said support (22) arranged in said external structure (14), next to and in contact with the two contact portions (16).

6. Seal according to claim 5, **characterised in that** said support (22) displays with said two contact portions (16) of said external structure (14), two non-sliding mechanical connections, respectively.

7. Seal according to any of claims 3 to 6, **characterised in that** said support (22) adopts in the cross-section thereof the shape of a vertically tapered C, the two end portions of the C (22a) being in contact with said contact portions (16), respectively.

8. Seal according to claim 1 or claim 2, **characterised in that** said two contact portions (16) are connected with each other by two opposite side flanks (118), jointly forming with each contact portions (16) an external seal structure (14).

9. Seal according to claim 8, **characterised in that** said external seal structure (14) has a cross-section in the general shape of a rectangle or square.

10. Seal according to claim 8 or claim 9, **characterised in that** said support (22) is arranged in said external structure (14), next to and in contact with the two contact portions (16).

11. Seal according to claim 10, **characterised in that** said support (22) displays with said two contact portions (16) of said external structure (14), two sliding mechanical connections, respectively.

12. Seal according to any of claims 8 to 11, **characterised in that** said support (22) displays a substantially tubular shape, the opposite end faces (22b, 22b) thereof being in contact with the two contact portions (16) respectively.

13. Seal according to any of claims 8 to 12, **characterised in that** each side flank (118) is mounted at the ends thereof on both contact portions (16), via two tight and flexible mechanical connections, respectively.

14. Seal according to any of the above claims, **characterised in that** said support (22) is metallic, made of a second alloy.

15. Seal according to any of the above claims, **characterised in that** it displays a substantially annular shape.

16. Assembly comprising at least one seal (10) according to any of the above claims, inserted between a first and a second member (2' , 6).

17. Assembly according to claim 16, **characterised in that** the first and second members (2', 6) are respectively made of materials displaying different heat expansion coefficients.

18. Assembly according to claim 17, **characterised in that** the first and second members are respectively made of metal and ceramics.

19. Electrochemical cell system (1) comprising at least one seal (10) according to any of claims 1 to 15.

20. System according to claim 19, **characterised in that** it comprises at least one electrochemical cell (1) provided with an anode (2), a cathode (4), and an electrolyte (6) arranged between the anode and the cathode, an anodic interconnector (2') and a cathodic interconnector (4') being associated with said electrochemical cell (1), connected to the anode and the cathode, respectively, said system also comprising at least one seal (10) according to any of claims 1 to 16, placed between said electrolyte (6) and the anodic interconnector (2'), and/or between said electrolyte (6) and the cathodic interconnector (4').

21. System according to claim 20, **characterised in that** it is a high temperature electrolyser, or a fuel cell operating at high temperatures.

22. Method for fitting a seal according to any of claims 1 to 15, intended to be inserted between a first and second member of an electrochemical cell system operating at an operating temperature below said predetermined temperature conditions, said method comprising the following steps:
- fitting of the seal between the first and second members;
- increase in the temperature so as to bring the seal to the packing temperature according to the predetermined temperature conditions;
- maintenance of the temperature at said packing temperature and application of a pressure on said electrochemical cell system, so as to obtain a compression of said contact portions of the seal in said predetermined stress conditions, at a compression rate comprised between 10⁻³ and 10⁻⁵ s⁻¹; and
- reduction of the temperature so as to bring the seal to said system operating temperature, while maintaining a pressure on said electrochemical cell system.

23. Method according to claim 22, **characterised in that** said packing temperature is set at around 950°C, and **in that** said operating temperature is set at around 800°C.

## Patentansprüche

1. Verbindungsabdichtung (10) zur Anbringung zwischen einem ersten und einem zweiten Element, die Abdichtung umfassend zwei in einer Abstandsrichtung von einander beabstandete Kontakt- bzw. Anlagebereiche (16) zur dichtenden Anlage gegen das genannte erste bzw. zweite Element, wobei diese Kontakt-bzw. Anlagebereiche (16) aus einer ersten Legierung hergestellt sind, welche unter vorbestimmten Belastungsbedingungen einschließlich vorbestimmten Bedingungen von Temperatur und Verformungs- bzw. Formänderungsgeschwindigkeit Super-plasti zitätseigenschaften zeigen, wobei die genannte Verformungs-bzw. Formänderungsge-schwindigkeit im Bereich zwischen 10⁻³ bis 10⁻⁵ liegt und wobei die genannten Kontakt- bzw. Anlagebereiche (16) an einem zwischen ihnen angeordneten Trag- bzw. Halterungsmittel (22) angebracht sind, das so ausgebildet ist, dass es unter den genannten vorbestimmten Belastungsbedingungen eine mechanische Widerstandsfestigkeit gegenüber einer Pressung bzw. Zusammendrückung in der genannten Abstandsrichtung aufweist, die größer als die Widersdtandsfestigkeit der genannten Kontakt- bzw. Anlagebereiche (16) ist, **dadurch gekennzeichnet dass** die genannte erste Legierung die Elemente Fe, Ni in einem Verhältnisanteil von 50 bis 55 %, Nb in einem Verhaltnisanteil von 4,75 bis 5,25 %, Mo in einem Verhältnisanteil von 2,8 bis 3,3 % sowie Ti in einem Verhältnisanteil von 0,65 bis 1,15 % enthält, und dass diese Legierung bei Temperaturen im Bereich um 950°C herum Superplastizitätseigenschaften besitzt.

2. Verbindungsabdichtung nach Anspruch 1, **dadurch gekennzeichnet, dass** sie Mittel aufweist, welche eine Relativverschiebung zwischen den genannten beiden Kontakt- bzw. Anlagebereichen entlang einer zu der Abstandsrichtung rechtwinkligen radialen Richtung gestatten.

3. Verbindungsabdichtung nach Anspruch 2, **dadurch gekennzeichnet, dass** die genannten Kontakt- bzw. Anlagebereiche (16) einstückig mit einem die Kontakt- bzw. Anlagebereiche verbindenden Zwischen- bzw. Mittelteil (18) ausgebildet sind, derart dass sie gemeinsam ein äußeres Gebilde (14) der Verbindungsabdichtung darstellen.

4. Verbindungsabdichtung nach Anspruch 3, **dadurch gekennzeichnet, dass** der genannte Mittel- bzw. Zwischenteil (18) des äußeren Gebildes der Verbindungsabdichtung einen C-förmigen, einen CC-förmigen oder einen E-förmi-gen Abschnitt bildet.

5. Verbindungsabdichtung nach Anspruch 3 oder nach Anspruch 4, **dadurch gekennzeichnet, dass** das genannte Trag- bzw. Halterungsmittel (22) in dem genannten äußeren Gebilde (14) rechtwinklig zu und in Berührung mit den beiden Kontakt- bzw. Anlagebereichen (16) angeordnet ist.

6. Verbindungsabdichtung nach Anspruch 5, **dadurch gekennzeichnet, dass** das genannte Trag- bzw. Halterungsmittel (22) mit den beiden Kontakt- bzw. Anlagebereichen (16) des äußeren Gebildes (14) zwei gleitfreie mechanische Verbindungen bildet.

7. Verbindungsabdichtung nach einem beliebigen der Ansprüche 3 bis 5 , **dadurch gekennzeichnet, dass** das Trag- bzw. Halterungsmittel (22) im Schnitt die Form eines in Richtung seiner Höhe längsgestreckten C (22a) besitzt, wobei die beiden Enden des C (22a) mit den genannten beiden Kontakt- bzw. Anlagebereichen (16) in Kontakt stehen.

8. Verbindungsabdichtung nach Anspruch 1 oder nach Anspruch 2, **dadurch gekennzeichnet, dass** die beiden Kontakt- bzw. Anlagebereiche (16) mit einander durch zwei einander gegenüberliegende Seitenflanken (118) verbunden sind, welche zusammen mit den Kontakt- bzw. Anlagebereichen (16) ein äußeres Gebilde (14) der Verbindungsabdichtung bilden.

9. Verbindungsabdichtung nach Anspruch 8, **dadurch gekennzeichnet, dass** das äußere Gebilde (14) der Verbindungsabdichtung einen allgemein rechteckförmigen oder quadratischen Querschnitt aufweist.

10. Verbindungsabdichtung nach Anspruch 8 oder nach Anspruch 9, **dadurch gekennzeichnet, dass** das Trag- bzw. Halterungsmittel (22) in dem genannten äußeren Gebilde (14) rechtwinklig zu und in Berührung mit den beiden Kontakt- bzw. Anlagebereichen (16) angeordnet ist.

11. Verbindungsabdichtung nach Anspruch 10, **dadurch gekennzeichnet, dass** das Trag- bzw. Halterungsmittel (22) mit den beiden Kontakt- bzw. Anlagebereichen (16) des genannten äußeren Gebildes (14) zwei mechanische Verbindungen mit Gleitvermögen bilden.

12. Verbindungsabdichtung nach einem beliebigen der Ansprüche 8 bis 11, **dadurch gekennzeichnet, dass** das genannte Trag- bzw. Halterungsmittel (22) im wesentlichen rohrförmig ausgebildet ist und dass seine beiden gegenüberliegenden End- bzw. Stirnflächen (22b,22b) jeweils in Berührung mit den beiden Kontakt- bzw. Anlagebereichen (16) stehen.

13. Verbindungsabdichtung nach einem beliebigen der Ansprüche 8 bis 12, **dadurch gekennzeichnet, dass** jeweils jede Seitenflanke (118) an ihren Enden mit den beiden Kontakt- bzw. Anlagebereichen (16) mittels zwei mechanischen, dichtschließenden und flexiblen Verbindungen verbunden ist.

14. Verbindungsabdichtung nach einem beliebigen der vorhergehenden Ansprüche, **dadurch gekennzeichnet, dass** das genannte Trag- bzw. Halterungsmittel (22) aus Metall einer zweiten Legierung hergestellt ist.

15. Verbindungsabdichtung nach einem beliebigen der vorhergehenden Ansprüche, **dadurch gekennzeichnet, dass** sie im wesentlichen ringförmig ausgebildet ist.

16. Baugruppe, welche wenigstens eine Verbindungsabdichtung (10) nach einem beliebigen der vorhergehenden Ansprüche umfasst, in Anordnung zwischen einem ersten und einem zweiten Element (2', 6).

17. Baugruppe nach Anspruch 16, **dadurch gekennzeichnet, dass** das erste und das zweite Element (2', 6) jeweils aus Materialien mit unterschiedlichen Wärmeausdehnungskoeffizienten bestehen.

18. Baugruppe nach Anspruch 17, **dadurch gekennzeichnet, dass** das erste und das zweite Element jeweils aus Metall und aus Keramik besteht.

19. System mit einer elektrochemischen Zelle (1), welches wenigstens eine Verbindungsabdichtung (10) gemäß einem beliebigen der Ansprüche 1 bis 15 umfasst.

20. System nach Anspruch 19, **dadurch gekennzeichnet, dass** es wenigstens eine elektrochemische Zelle (1) mit einer Anode (2), einer Kathode (4) sowie mit einem zwischen der Anode und der Kathode angeordnetem Elektrolyten (6) umfaßsst, dass ein Anoden-Interkonnektor bzw. -verbundschalter (2') und ein Kathoden-Interkonnektor bzw. -verbundschalter (4') der elektrochemischen Zelle (1) zugeordnet und jeweils mit der Anode bzw. mit der Kathode verbunden sind, und dass das System des weiteren wenigstens eine Verbindungsabdichtung (10) gemäß einem beliebigen der Ansprüche 1 bis 16 in Anordnung zwischen dem Elektrolyten (6) und dem Anoden-Interkonnektor bzw. -verbundschalter (2') und/oder zwischen dem Elektrolyten (6) und dem Kathoden-Interkonnektor bzw. -verbundschalter (4') umfasst.

21. System nach Anspruch 20, **dadurch gekennzeichnet, dass** das System eine Hochtemperatur-Elektrolysiervorrichtung oder eine Hochtemperatur-Brennstoffzelle ist.

22. Verfahren zur Anbringung einer Verbindungsabdichtung nach einem beliebigen der Ansprüche 1 bis 15, die zur Anordnung zwischen einem ersten und einem zweiten Element eines Systems einer elektrochemischen Zelle, zum Betrieb bei einer Betriebstemperatur, die unterhalb den genannten vorbestimmten Temperaturbedingungen liegt, das Verfahren umfassend die folgenden Verfahrensschritte bzw. -Stufen:
- Einbringen der Verbindungsabdichtung zwischen das erste und das zweite Element;
- Temperaturerhöhung derart, dass die Verbindung auf eine Konditionierungstemperatur gebracht wird, die innerhalb den genannten vorbestimmten Temperaturbedingungen liegt;
- Aufrechterhaltung der Temperatur auf der genannten Konditionierungstemperatur und Preßdruckbeaufschlagung des Systems der elektrochemischen Zelle derart, dass eine Stauchung bzw. Quetschung der genannten Kontakt- bzw. Anlagebereiche der Verbindung unter den genannten vorbestimmten Bedingungen von Verformungs- bzw. Formänderungsgeschwindigkeit erreicht wird, bei einer Verformungs- bzw. Formänderungsgeschwindigkeit im Bereich zwischen 10⁻³ bis 10⁻⁵ s⁻¹; sowie
- Verringerung der Temperatur derart, dass die Verbindung auf die genannte Betriebstemperatur des Systems gebracht wird, bei gleichzeitiger Aufrechterhaltung einer Preßdruckbeaufschlagung des Systems der elektrochemischen Zelle.

23. Verfahren nach Anspruch 22, **dadurch gekennzeichnet, dass** die genannte Konditionierungstemperatur auf einen festen Wert um 950 °C herum eingestellt wird und dass die Betriebstemperatur auf einen festen Wert im Bereich um 800 °C eingestellt wird.
